# EUROPÄISCHE PATENTANMELDUNG

(11) **EP 1 320 175 A2**
(43) Veröffentlichungstag der Anmeldung: **18.06.2003**
(21) Anmeldenummer: 02027037.7
(22) Anmeldetag: 03.12.2002
(51) Int. Cl.: H02K 7/108

(54) **Betätigungsvorrichtung, insbesondere zur Betätigung von Sperrdifferentialen von Fahrzeugen**

(30) Priorität: 12.12.2001 DE 10160847
(71) Anmelder: Valeo Motoren und Aktuatoren GmbH, 74321 Bietigheim-Bissingen (DE)
(72) Erfinder: Frey, Ronald, 74357 Bönningheim (DE); Helmich, Johannes, 97877 Wertheim (DE); Schmidt, Harald, 74374 Zaberfeld (DE); Scheytt, Birgit, 75428 Illingen (DE); Baeskow, Werner, 74394 Hessigheim (DE)
(74) Vertreter: Jahn, Wolf-Diethart

(57) **Zusammenfassung**

Die Erfindung betrifft eine Betätigungsvorrichtung, insbesondere zur Betätigung von Sperrdifferentialen von Fahrzeugen, mit einer Betätigungswelle, mit einer Antriebseinheit zum Antreiben der Betätigungswelle, wobei die Antriebseinheit ein auf der Betätigungswelle drehfest angeordnetes Ankerpaket sowie einen auf der Betätigungswelle drehfest angeordneten Kommutator umfasst, mit einer elektromagnetischen Bremseinheit zum Abbremsen und/oder Halten der Betätigungswelle, wobei die Bremseinheit einen auf der Ankerwelle drehfest angeordneten Bremsnabenflansch umfasst, und mit einem die Antriebseinheit und die Bremseinheit dicht umschließenden, ein- oder mehrteilig ausgebildeten Gehäuse, wobei das freie Ende der Betätigungswelle aus dem Gehäuse herausragt.

## Beschreibung

Die Erfindung betrifft eine Betätigungsvorrichtung, insbesondere zur Betätigung von Sperrdifferentialen von Fahrzeugen.

Derartige Betätigungsvorrichtungen finden insbesondere im Kraftfahrzeug zur Unterstützung der Antriebs- und Bremssysteme Verwendung. Sie umfassen regelmäßig eine Antriebseinheit zum Antreiben einer Betätigungswelle und eine Abbremseinheit zum Abbremsen der Betätigungswelle. Über die Betätigungswelle kann ein Sperrdifferential zu- bzw. abgeschaltet werden. Den eigentlichen Schaltvorgang übernimmt hierbei die Antriebseinheit. Die Bremseinheit hält die Betätigungswelle in einer vorgegebenen Stellung.

An derartige Betätigungsvorrichtungen sind hohe Anforderungen zu stellen. Insbesondere müssen die Betriebstemperaturen bis 200° C standhalten. Die Betätigungswelle darf ferner nur einem relativ geringen Spiel unterliegen, um ein funktionssicheres Betätigen der Sperrdifferentiale gewährleisten zu können. Außerdem soll die Betätigungsvorrichtung einen einfachen Aufbau aufweisen und auf einfache Art und Weise montierbar sein. Die Betätigungsvorrichtung soll zudem kompakt bauen.

Der vorliegenden Erfindung liegt deshalb die Aufgabe zugrunde, eine Betätigungsvorrichtung vorzuschlagen, die den genannten Anforderungen gerecht wird.

Zur Lösung der Aufgabe ist eine Betätigungsvorrichtung vorgesehen, mit einer Betätigungswelle, mit einer Antriebseinheit zum Antreiben der Betätigungswelle, wobei die Antriebseinheit ein auf der Betätigungswelle drehfest angeordnetes Ankerpaket sowie einen auf der Betätigungswelle drehfest angeordneten Kommutator aufweist, mit einer elektromagnetischen Bremseinheit zum Abbremsen der und/oder Halten der Betätigungswelle, wobei die Bremseinheit einen auf der Ankerwelle drehfest angeordneten Bremsnabenflansch umfasst, und mit einem die Antriebseinheit und die Bremseinheit dicht umschließenden, ein- oder mehrteilig ausgebildeten Gehäuse, wobei das freie Ende der Betätigungswelle aus dem Gehäuse herausragt.

Eine derartige Betätigungsvorrichtung hat den Vorteil, dass die Antriebseinheit und die Bremseinheit räumlich dicht beieinander liegen und von einem gemeinsamen, ggf. mehrteilig ausgebildeten, Gehäuse umschlossen werden. Die Betätigungsvorrichtung baut folglich sehr kompakt und ist sicher gegen Umwelteinflüsse geschützt.

Eine bevorzugte Ausführungsform der Erfindung sieht vor, dass die Wellenoberfläche der Betätigungswelle axial verlaufende Kerbungen aufweist, die mit der Innenseite des Bremsnabenflansches eine Kerbpressverbindung bilden. Das Fügen mittels Kerben hat den Vorteil, dass es eine sehr einfache und formschlüssige Verbindung bildet, bei der die Fügepartner mit nicht zu engen, und damit teuren, Durchmessertoleranzen gefertigt werden müssen. Bei der Kerbpressverbindung werden die Fügepartner vorteilhafterweise lediglich im Bereich der Kerbungen formschlüssig gefügt. Dadurch sind die auftretenden Einpresskräfte, im Vergleich zu toleranzgenau zu fertigenden, über den gesamten Umfang der Fügeteile wirkenden Pressverbindungen, sehr viel geringer. Insbesondere dünnere Betätigungswellen können mit dem Bremsnabenflansch gefügt werden, ohne dass die Gefahr einer unerwünschten Verformung der Welle besteht. Schon eine geringe Verformung der Welle führt zu einem Taumelschlag und macht sich vor allem als störendes Geräusch beim Betrieb der Betätigungsvorrichtung bemerkbar.

Beim Fügen der Welle mit dem Fügepartner graben sich die Kerbungen vorteilhafterweise form- und kraftschlüssig in die Innenseite des Bremsnabenflansches ein. Die Innenseite des Bremsnabenflansches muss hierfür keine besonderen Anforderungen genügen und muss auch sonst nicht speziell bearbeitet werden.

Es hat sich als vorteilhaft herausgestellt, wenn die Höhe der Kerbungen im Bereich von etwa 2/100 mm liegen. Bei derartigen Kerbungen wird bei relativ geringen Fügekräften eine ausreichend gute Verbindung der Fügepartner erreicht.

Vorteilhafterweise ist der Bremsnabenflansch aus Aluminium gebildet. Gerade bei Verwendung eines derartig weichen Materials findet ein vorteilhaftes, relativ geringe Einpresskräfte erforderndes Eingraben der Kerbungen in das Aluminium statt. Da die Welle aus härterem Material als Aluminium gebildet ist, kann zudem eine unerwünschte Verformung der Welle beim Fügen der Welle mit dem Bremsnabenflansch nicht erfolgen.

Bei einer weiteren, besonders bevorzugten Ausführungsform der Erfindung ist vorgesehen, dass die Kerbungen jeweils an wenigstens einem Ende einen konischen Anstiegbereich aufweisen. Das Vorsehen eines derartigen konischen Anstiegbereichs hat den Vorteil, dass beim Fügen der Fügepartner ein Vorzentrieren erfolgt, bevor die maximale Fügekraft, aufgrund der Höhe der Kerbungen, zum Tragen kommt. Ferner kann es nicht zum Verkanten der Fügeteile kommen, und die Gefahr von Fressern durch evtl. vor den Fügeteilen vorhergeschobenen Spänen entfällt.

Eine vorteilhafte Ausgestaltung der Erfindung ergibt sich dann, wenn die Kerbungen nur in Bereichen der Betätigungswelle angeordnet sind, in denen der Bremsnabenflansch hohen radial wirkenden Kräften ausgesetzt ist. Dies hat den Vorteil, dass die Kerbungen nicht über die gesamte Länge der Betätigungswelle auszubilden sind. Außerdem werden die Fügekräfte hierdurch vermindert.

Die Kerbungen können sich vorteilhafterweise durchlaufend und/oder mit Unterbrechungen über die gesamte Länge der Betätigungswelle erstrecken. Dabei bildet die der Betätigungswelle zugewandte Innenseite des Kommutators und/oder des Ankerpakets, neben dem Bremsnabenflansch, ebenfalls eine Kerbpressverbindung. Die in Zusammenhang mit dem Bremsnabenflansch sich ergebenden Vorteile gelten entsprechend für die Kerbpressverbindung der Betätigungswelle mit dem Kommutator und/oder mit dem Ankerpaket.

Erfindungsgemäß kann ferner vorgesehen sein, dass die Betätigungswelle abschnittsweise geschliffen ist, wobei das Schleifen insbesondere vor der Anbringung der Kerbungen erfolgt. Dies hat den Vorteil, dass geschliffene Bereiche, insbesondere zur Anbringung von Lagerelementen, vorgesehen sein können. Beim Fügen der Betätigungswelle mit dem Fügepartner werden die geschliffenen Bereiche nicht beeinträchtigt, da der Durchmesser der Betätigungswelle im Bereich der Kerbungen größer ist, als im Bereich der geschliffenen Teile. Folglich können die Lagerelemente mit den geschliffenen Abschnitten der Betätigungswelle nach dem Fügen der Betätigungswelle mit dem Bremsnabenflansch, dem Kommutator und/oder dem Ankerpaket gefügt werden. Um einen sehr genauen Kerbdurchmesser herstellen zu können, kann erfindungsgemaß ebenfalls vorgesehen sein, dass die Betätigungswelle vor dem Fügen mit dem Fügepartner bzw. den Fügepartnern komplett geschliffen wird.

Bei einer weiteren Ausführungsform der Erfindung ist zur Montage der Bremseinheit die Bremseinheit über das freie Ende der Betätigungswelle auf die Betätigungswelle axial aufschiebbar. Während des Aufschiebens graben sich die Kerbungen in den Bremsflansch der Bremseinheit ein. Eine derartige Montage hat den Vorteil, dass sie blind erfolgen kann.

Ferner ist denkbar, dass die Innenseite des Bremsnabenflansches einen konisch auf die Betätigungswelle zulaufenden Abschnitt aufweist. Ein derartiger Abschnitt des Bremsnabenflansches trägt zur Selbstzentrierung der Fügepartner beim Fügen bei.

Bei einer besonders bevorzugten Ausführungsform der Erfindung sind vier um 90° versetzt zueinander angeordnete Kerbungen auf der Betätigungswelle vorgesehen. Hierdurch wird neben dem axialen Festsitz auch eine ausreichende Verdrehsicherung der Fügepartner zueinander gewährleistet.

Um ein sicheres Führen der Betätigungswelle auch während des Abbremsvorganges durch die Bremseinheit gewährleisten zu können, ist erfindungsgemäß bei einer bevorzugten Ausführungsform der Erfindung vorgesehen, dass sich die Betätigungswelle im Bereich der Bremseinheit über wenigstens ein Lagerelement gegen das Gehäuse abstützt.

Vorteilhafterweise ist der wellenseitige Lagerabschnitt des Lagerelements unmittelbar auf der Betätigungswelle angeordnet. Dies hat den Vorteil, dass der Kraftfluss direkt von der Betätigungswelle über das Lagerelement in das Gehäuse geleitet wird.

Alternativ hierzu ist denkbar, dass der wellenseitige Lagerabschnitt des Lagerelements auf dem Bremsnabenflansch angeordnet ist. Dies hat den Vorteil, dass der Bremsnabenflansch samt Lagerelement als selbstständig handhabbare Baugruppe vormontiert werden kann. Der Bremsnabenflansch samt Lagerelement wird dann gemeinsam über den Bremsnabenflansch mit der Betätigungswelle gefügt.

Bei einer weiteren Ausführungsform der Erfindung ist vorgesehen, dass die Bremseinheit einen gegen das Gehäuse drehgesicherten, eine Bremswicklung umfassenden Bremskörper und einen eine Bremsscheibe aufweisenden, mit der Betäti-gungswelle drehfest verbundenen Bremsscheibenträger aufweist, wobei bei Bestromung der Bremswicklung die Bremsscheibe gegen den Bremskörper gezogen oder von dem Bremskörper abgestoßen wird. Hierdurch wird über eine geringe Anzahl von Bauteilen eine Bremseinheit verwirklicht, die den Anforderungen an die Betätigungsvorrichtung gerecht wird. Die Bremsscheibe ist vorzugsweise als Bremsscheibenring ausgebildet, wobei in montiertem Zustand die Betätigungswelle den zentralen Durchbruch des Bremsscheibenringes durchgreift.

Vorteilhafterweise ist der Bremskörper als Magnetbremskörper ausgebildet. Dies hat den Vorteil, dass keine zusätzlichen Dauermagneten vorzusehen sind, die im Zusammenspiel mit der Bremswicklung eine geeignete Bremswirkung erzielen.

Bei einer besonders bevorzugten Ausführungsform der Erfindung ist vorgesehen, dass die Bremsscheibe gegenüber dem Bremsscheibenträger axial bewegbar ist, wobei zwischen der Bremsscheibe und dem Bremsscheibenträger ein Federelement angeordnet ist, das die Bremsscheibe in die dem Bremskörper zugewandter oder abgewandter Richtung beaufschlagt. Dies hat den Vorteil, dass sich die Bremsscheibe sowohl bei betätigter als auch bei nicht betätigter Bremseinheit in einer definierten Position befindet. Dadurch werden Klappergeräusche bei Betrieb der Betätigungsvorrichtung unterbunden.

Der Bremsscheibenträger kann unmittelbar oder mittels einer Bremsscheibennabe auf der Betätigungswelle angeordnet sein. Der Bremsscheibenträger oder die Bremsscheibennabe ist hierbei als separates Bauteil, oder einstückig mit dem Bremsnabenflansch ausgebildet. Die einstückige Ausbildung mit dem Bremsnabenflansch hat den Vorteil, dass zusätzliche Bauteile entfallen. Lagetoleranzen können hierdurch geringer gehalten werden.

Eine weitere Ausführungsform der Erfindung zeichnet sich dadurch aus, dass der Bremskörper bremsnabenflanschseitig befestigt ist, wobei zwischen dem Bremskörper und dem Bremsnabenflansch ein Lager, insbesondere ein Gleitlager, angeordnet ist. Dies hat den Vorteil, dass der Bremskörper mit dem Bremsnabenflansch als selbstständig handhabbare Baugruppe ausgebildet sein kann.

Andererseits ist erfindungsgemäß ebenfalls denkbar, dass der Bremskörper gehäuseseitig befestigt ist. Bei einer derartigen Ausführungsform der Erfindung findet sich in montiertem Zustand vorteilhafterweise zwischen dem Bremskörper und dem Bremsnabenflansch oder der Betätigungswelle ein Luftspalt. Dies hat den Vorteil, dass ein Lagerelement, insbesondere ein Gleitlager, zwischen dem Bremskörper und dem Bremsnabenflansch oder der Betätigungswelle nicht vorzusehen ist.

Zur Realisierung einer Verdrehsicherung des Bremskörpers gegen das Gehäuse kann der Bremskörper mit dem Gehäuse beispielsweise abschnittsweise verstemmt sein. Ferner ist denkbar, dass der Bremskörper definierte Erhebungen aufweist, beispielsweise in Form von Zapfen, die in damit korrespondierende Aussparungen, beispielsweise Sackbohrungen, eingreifen.

Vorteilhafterweise weist das Gehäuse ein topfförmiges Grundgehäuse und einen Gehäusedeckel mit einem Durchbruch für die Betätigungswelle auf. Die Antriebseinheit kann hierbei im Bereich des Grundgehäuses und die Bremseinheit im Bereich des Gehäusedeckels angeordnet sein.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Figur 1: einen Längsschnitt durch eine erste erfindungsgemäße Betätigungsvorrichtung,
- Figur 2: einen Längsschnitt durch eine zweite erfindungsgemäße Betätigungsvorrichtung,
- Figur 3: einen Längsschnitt durch eine dritte erfindungsgemäße Betätigungsvorrichtung,
- Figur 4: einen Querschnitt durch eine Betätigungswelle einer erfindungsgemäßen Betätigungsvorrichtung, und
- Figur 5: eine Seitenansicht einer Betätigungswelle einer erfindungsgemäßen Betätigungsvorrichtung.

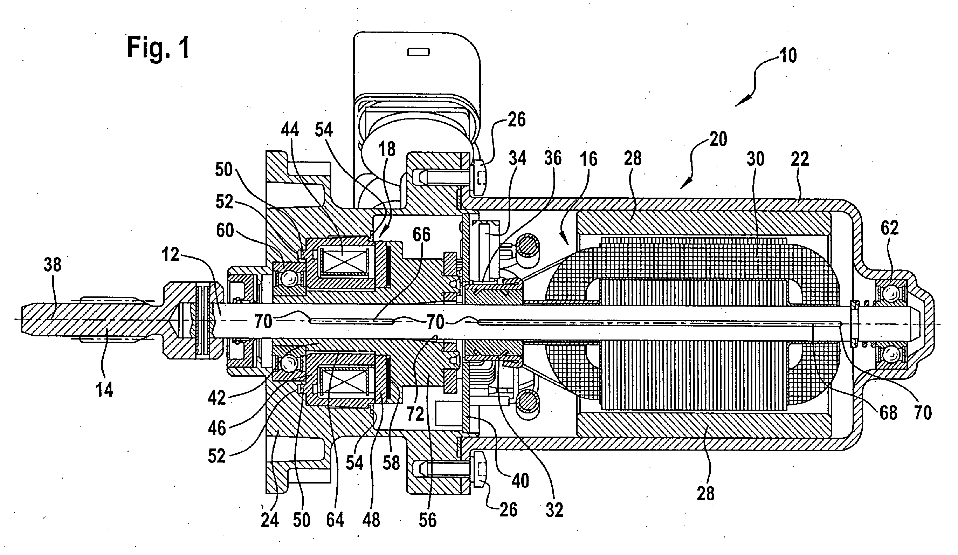

In der Figur 1 ist eine erste Ausführungsform einer erfindungsgemäßen Betätigungseinrichtung 10 dargestellt. Die Betätigungseinrichtung 10 weist an dem freien Ende einer Betätigungswelle 12 ein Ritzel 14 auf, über welches ein nicht dargestelltes Sperrdifferential eines Fahrzeuges betätigt werden kann. Dabei umfasst die Betätigungseinrichtung eine Antriebseinheit 16 und eine elektromagnetische Bremseinheit 18, wobei die Antriebseinheit 16 und die Bremseinheit 18 in einem gemeinsamen Gehäuse 20 untergebracht ist. Das Gehäuse 20 umfasst ein topfförmiges Grundgehäuse 22, welches die Antriebseinheit 16 aufnimmt. Ferner umfasst das Gehäuse 20 einen Gehäusedeckel 24, in dem die Bremseinheit 18 untergebracht ist. Mittels Verbindungsschrauben 26 kann der Gehäusedeckel 24 mit dem Grundgehäuse 20 dicht verschraubt werden.

Die Antriebseinheit 16 umfasst gehäuseseitige Dauermagnete 28, die mit einem auf der Betätigungswelle 12 drehfest angeordnetem Ankerpaket 30 zusammenwirken. Ferner umfasst die Antriebseinheit 16 einen auf der Betätigungswelle drehfest angeordneten Kommutator 32, gegen dessen Mantelfläche in Köchern 34 gelagerte Bürsten 36 wirken. Die Köcher 34 sind hierbei auf einer senkrecht zur Längsachse 38 der Betätigungswelle 12 angeordneten Bürstentrageplatte 40 befestigt. Auf der Bürstentrageplatte 40 sind ferner verschiedene elektrische Bauteile, beispielsweise Entstörer, vorgesehen.

Die Bremseinheit 18 umfasst einen drehfest auf der Betätigungswelle 12 angeordneten Bremsnabenflansch 42 sowie einen gegen den Gehäusedeckel 24 drehgesicherten, eine Bremswicklung 44 umfassenden Bremskörper 46. Ferner umfasst die Bremseinheit 18 eine gegenüber der Betätigungswelle 12 drehfest angeordnete, bedingt axial bewegbare Bremsscheibe 48, die als Bremsscheibenring ausgebildet ist. Bei Bestromung der Bremswicklung 44 wirkt die Bremsscheibe 48 gegen den ebenfalls ringförmig ausgebildeten Bremskörper 46. Bei Bestromung der Bremswicklung 46 tritt folglich der Bremseffekt ein und die Betätigungswelle 12 wird über den Bremsnabenflansch 42, die Bremsscheibe 48 und den Bremskörper 46 gegen das Gehäuse 20 bzw. gegen den Gehäusedeckel 24 drehgesichert. Zur drehsicheren Anordnung des Bremskörpers 46 in dem Gehäusedeckel 24 sieht der Bremskörper 46 sich koaxial zur Längsachse 38 erstreckende Zapfen 50 vor, die in entsprechend ausgebildete, gehäusedeckelseitige Sackbohrungen 52 ragen. Zur sicheren Halterung des Bremskörpers 46 innerhalb des Gehäusedeckels 24 sind Verstemmabschnitte 54 am Gehäusedeckel 24 vorgesehen, die in entsprechende Abschnitte an der Mantelfläche des Bremskörpers 46 verstemmt werden.

Um bei nicht betätigter Bremseinheit 18 eine definierte Position der Bremsscheibe 48 zu gewährleisten, ist zwischen der Bremsscheibe 48 und einem Bremsscheibenträgerabschnitt 56 des Bremsnabenflansches 42 ein Federelement 58 vorgesehen, dass die Bremsscheibe 48 gegen den Bremsscheibenträgerabschnitt 56 beaufschlagt.

Zur Lagerung der Betätigungswelle 12 sind zwei Lagerelemente 60 und 62 vorgesehen.

Bei der Betätigungseinrichtung 10 gemäß Figur 1 ist der wellenseitige Lagerabschnitt des Lagerelements 60 auf dem Bremsnabenflansch 42 angeordnet. Dies hat den Vorteil, dass eine einfache Montage der Betätigungseinrichtung 10 möglich ist, da die gesamte Bremseinheit 18 samt Lagerelement 60 in den Gehäusedeckel 24 eingepresst bzw. eingesetzt werden kann. Die gesamte Bremseinheit 18 samt Lagerelement 62 kann folglich als zusammenhängende Baugruppe separat vormontiert und gehandhabt werden. Zwischen der innenliegenden Mantelfläche des Bremskörpers 46 und der dieser Mantelfläche zugewandten Seite des Bremsnabenflansches 42 ist ein Luftspalt 64 vorgesehen. Lagerelemente oder Lagermittel zwischen dem Bremskörper 46 und dem Bremsnabenflansch 42 sind folglich nicht erforderlich.

In dem Schnitt gemäß Figur 1 sind an der Betätigungswelle 12 entlang einer Linie zwei Kerbungen 66 und 68 vorgesehen. Die Kerbung 66 liegt im Bereich des Bremsnabenflansches 42 und die Kerbung 68 im Bereich der Antriebseinheit 16.

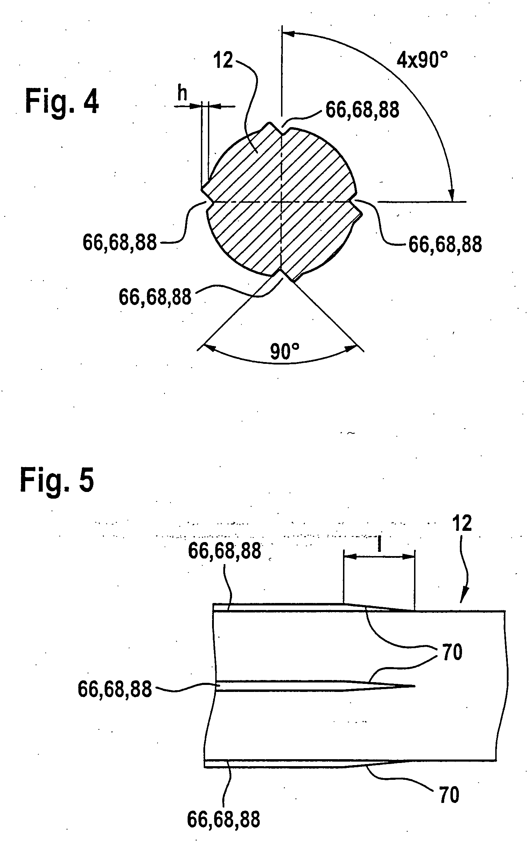

Wie dem Querschnitt gemäß Figur 4 entnommen werden kann, weist die Betätigungswelle 12 insgesamt je vier Kerbungen 66 und je vier Kerbungen 68 auf. Die Kerbungen 66, 68 sind jeweils um 90° versetzt zueinander angeordnet. Die Kerbungen als solche weisen einen Einkerbwinkel von jeweils 90° auf. Die Höhe h der Kerbungen liegt im Bereich von etwa 2/100 mm. Im Bereich der Lagerelemente 60 und 62 weist die Betätigungswelle 12 keine Kerbungen auf. Diese Bereiche können zur Realisierung einer hohen Genauigkeit geschliffen sein. Nach dem Schleifvorgang können die Kerbungen 66, 68 in die Betätigungswelle eingebracht werden.

Wie der Figur 5 entnommen werden kann, weisen die Kerbungen 66, 68 an ihren Endungen jeweils konische Abschnitte 70 auf, die sich in axialer Richtung über die Länge 1 erstrecken.

Zur Montage der Betätigungswelle 12 mit dem Bremsnabenflansch 42 wird das das Ritzel 14 aufweisende Ende der Betätigungswelle, ohne Ritzel 14, in den zentralen Durchbruch des Bremsnabenflansches eingeführt. Die Innenseite des Bremsnabenflansches 42 weist hierbei einen auf die Betätigungswelle 12 zulaufenden konischen Abschnitt 72 auf. Aufgrund der konischen Abschnitte 70 und des konischen Abschnitts 72 erfolgt beim Fügen des Bremsnabenflansches 42 mit der Betätigungswelle 12 eine Selbstzentrierung. Beim Fügen graben sich die Erhöhungen der Kerbungen 66, 68 in die Innenseite des vorzugsweise aus Aluminium ausgebildeten Bremsnabenflansches 42 ein. Zwischen dem Bremsnabenflansch 42 und der Betätigungswelle 12 bildet sich folglich eine Kerbpressverbindung, die mit relativ geringen Einpresskräften realisiert werden kann.

Die Kerbungen 68 wirken im montierten Zustand, wie er in Figur 1 dargestellt ist, mit dem Ankerpaket 30 sowie mit dem Kommutator 32 zusammen. Aufgrund der konischen Abschnitte 70 der Kerbungen 68 erfolgt auch hier beim Fügen eine Selbstzentrierung. Da vorteilhafterweise der formschlüssige Festsitz zwischen Betätigungswelle 12 und dem Kommutator 32 bzw. dem Ankerpaket 30 lediglich in den Erhöhungen der Kerbungen 68 erfolgt, können die Einpresskräfte relativ gering gehalten werden. Der geschliffene Abschnitt der Betätigungswelle 12, der im eingebauten Zustand mit dem Lagerelement 62 zusammenwirkt, wird beim Fügen der Betätigungswelle 12 mit Kommutator 32 und Ankerpaket 30 nicht beeinträchtigt.

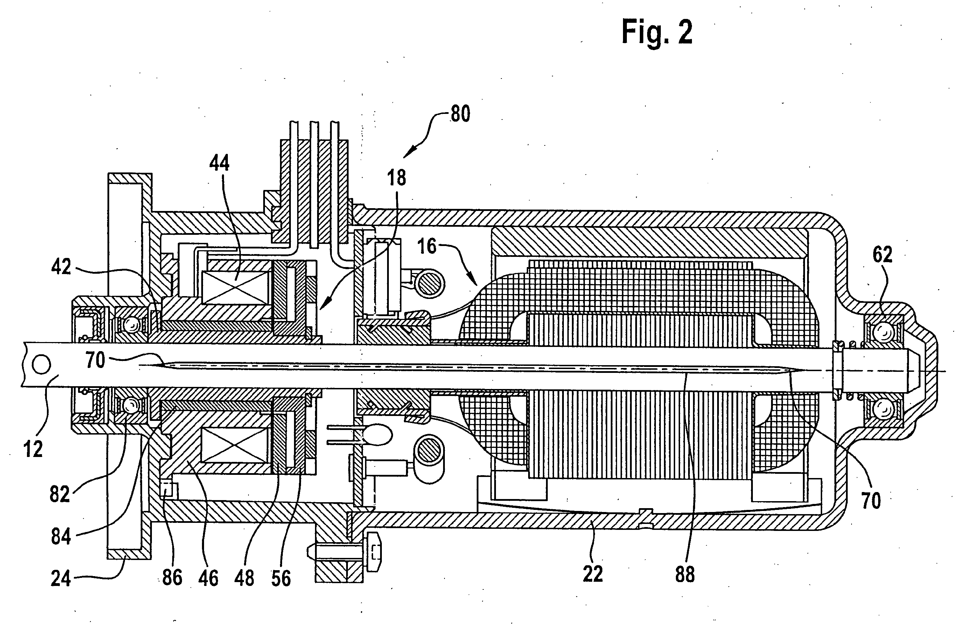

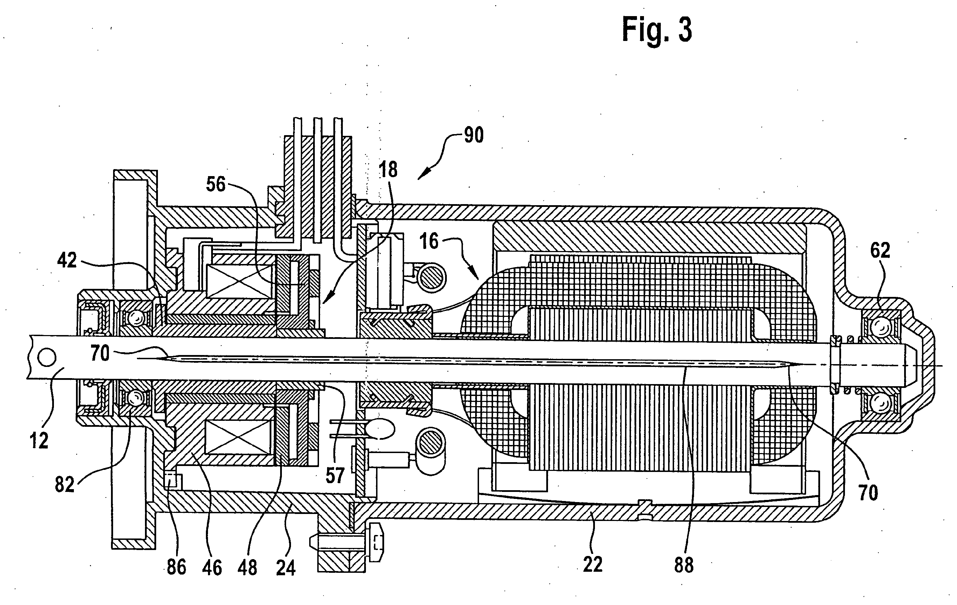

In der Figur 2 ist eine zweite erfindungsgemäße Betätigungseinrichtung 80 und in der Figur 3 eine dritte erfindungsgemäße Betätigungseinrichtung 90 dargestellt. Der der Betätigungseinrichtung 10 entsprechende Bauteile sind bei den Betätigungseinrichtungen 80 und 90 mit den gleichen Bezugszahlen versehen.

Die Betätigungseinrichtung 80 unterscheidet sich von der Betätigungseinrichtung 10 u.a. dadurch, dass das bremseinheitsseitige Lagerelement 82 einen unmittelbar an der Betätigungswelle 12 angeordneten Lagerabschnitt aufweist. Ferner ist der Bremskörper 46 nicht gehäusedeckelseitig angeordnet, sondern ist über ein Gleitlager 84 an dem Bremsnabenflansch 42 angeordnet. Zur Verdrehsicherung des Bremskörpers 46 ist gemäß Figur 2 eine in eine gehäusedeckelseitig angeordnete Verzahnung eingreifende Nase 86 vorgesehen.

Die Ausführungsform gemäß Figur 2 hat den Vorteil, dass der zwischen dem Bremskörper 46 und der Bremsscheibe 48 vorzusehende Luftspalt in der den Bremskörper 46 und die Bremsscheibe 48 aufweisenden Baugruppe fest eingestellt werden kann.

Ein weiterer Unterschied zwischen der Betätigungseinrichtung 10 gemäß Figur 1 und der Betätigungseinrichtung 80 gemäß Figur 2 ist, dass bei der Betätigungseinrichtung 80 keine zwei entlang einer Linie angeordnete Kerbungen 66 und 68 vorgesehen sind. Es sind vielmehr sich über die Antriebseinheit 16 und die Bremseinheit 18 erstreckende Kerbungen 88 vorgesehen. Die Kerbungen 88'sind entsprechend den Figuren 4 und 5 ausgebildet. Dadurch, dass keine Unterbrechungen der Kerbungen 88 vorgesehen sind, sind diese einfacher zu fertigen.

Bei der Betätigungseinrichtung 90 gemäß Figur 3 ist entsprechend der Betätigungsvorrichtung 80 nach Figur 2 das Lagerelement 82 unmittelbar an der Betätigungswelle 12 anliegend angeordnet. Die Betätigungseinrichtung 90 unterscheidet sich von der Betätigungseinrichtung 80 dadurch, dass der Bremsscheibenträger 56 separat von dem Bremsnabenflansch 42 als eigenes Bauteil ausgebildet ist. Der Bremsscheibenträger 56 ist hierbei über eine Bremsscheibennabe 57 an der Betätigungswelle 12 angeordnet. Vorteilhafterweise kann bei dieser Ausführungsform der Luftspalt zwischen der Bremsscheibe 48 und dem Bremskörper 46 noch während der Montage des Bremsnabenflansches 42 bzw. des Bremsscheibenträgerabschnitts 56 eingestellt werden.

Alle in der Beschreibung, den nachfolgenden Ansprüchen und der Zeichnung dargestellten Merkmale können sowohl einzeln, als auch in beliebiger Kombination miteinander erfindungswesentlich sein.

## Patentansprüche

1. Betätigungsvorrichtung (10, 80, 90), insbesondere zur Betätigung von Sperrdifferentialen von Fahrzeugen, mit einer Betätigungswelle (12), mit einer Antriebseinheit (16) zum Antreiben der.Betätigungswelle (12), wobei die Antriebseinheit (16) ein auf der Betätigungswelle (12) drehfest angeordnetes Ankerpaket (30) sowie einen auf der Betätigungswelle drehfest angeordneten Kommutator (32) umfasst, mit einer elektromagnetischen Bremseinheit (18) zum Abbremsen und/oder Halten der Betätigungswelle (12), wobei die Bremseinheit (18) einen auf der Ankerwelle (12) drehfest angeordneten Bremsnabenflansch (42) umfasst, und mit einem die Antriebseinheit (16) und die Bremseinheit dicht umschließenden, ein- oder mehrteilig ausgebildeten Gehäuse (20), wobei das freie Ende der Betätigungswelle (12) aus dem Gehäuse (20, 22, 24) herausragt.

2. Betätigungsvorrichtung (10, 80, 90) nach Anspruch 1, **dadurch gekennzeichnet, dass** die Wellenoberfläche der Betätigungswelle (12) axial verlaufende Kerbungen (66, 68, 88) aufweist, die mit der Innenseite des Bremsnabenflansches (42) eine Kerbpressverbindung bilden.

3. Betätigungsvorrichtung (10, 80, 90) nach Anspruch 2, **dadurch gekennzeichnet, dass** die Kerbungen (66, 68, 88) in der Innenseite des Bremsnabenflanschs (42) eingegraben sind.

4. Betätigungsvorrichtung (10, 80, 90) nach Anspruch 2 oder 3, **dadurch gekennzeichnet, dass** die Höhe der Kerbungen (66, 68, 88) im Bereich von etwa 2/100 mm liegen.

5. Betätigungsvorrichtung (10, 80, 90) nach Anspruch 2, 3 oder 4, **dadurch gekennzeichnet, dass** der Bremsnabenflansch (42) aus Aluminium ist.

6. Betätigungsvorrichtung (10, 80, 90) nach einem der Ansprüche 2 bis 5, **dadurch gekennzeichnet, dass** die Kerbungen (66, 68, 88) jeweils an wenigstens einem Ende einen konischen Anstiegbereich (70) aufweisen.

7. Betätigungsvorrichtung (10, 80, 90) nach einem der Ansprüche 2 bis 6, **dadurch gekennzeichnet, dass** die Kerbungen (66, 68, 88) in Bereichen der Betätigungswelle (12) angeordnet sind, in denen der Bremsnabenflansch (42) hohen radial wirkenden Kräften ausgesetzt ist.

8. Betätigungsvorrichtung (10, 80, 90) nach einem der Ansprüche 2 bis 7, **dadurch gekennzeichnet, dass** sich die Kerbungen (66, 68, 88) durchlaufend und/oder mit Unterbrechungen über die Länge der Betätigungswelle (12) erstrecken, wobei die der Betätigungswelle (12) zugewandte Innenseite des Kommutators (32) und/oder des Ankerpakets (30) mit der Betätigungswelle (12) eine Kerbpressverbindung bildet.

9. Betätigungsvorrichtung (10, 80, 90) nach einem der Ansprüche 2 bis 8, **dadurch gekennzeichnet, dass** die Betätigungswelle (12) abschnittsweise geschliffen ist, wobei das Schleifen insbesondere vor der Anbringung der Kerbungen (66, 68, 88) erfolgt.

10. Betätigungsvorrichtung (10, 80., 90) nach einem der Ansprüche 2 bis 9, **dadurch gekennzeichnet, dass** zur Montage der Bremseinheit (18) die Bremseinheit (18) über das freie Ende der Betätigungswelle (12) auf die Betätigungswelle (12) axial aufschiebbar ist.

11. Betätigungsvorrichtung (10) nach einem der Ansprüche 2 bis 10, **dadurch gekennzeichnet, dass** die Innenseite des Bremsnabenflansches (42) einen konisch auf die Betätigungswelle (12) zulaufenden Abschnitt (72) aufweist.

12. Betätigungsvorrichtung (10, 80, 90) nach einem der Ansprüche 2 bis 11, **dadurch gekennzeichnet, dass** vier um 90° versetzt zueinander angeordnete Kerbungen (66, 68, 88) vorgesehen sind.

13. Betätigungsvorrichtung (10, 80, 90) nach einem der vorhergehenden Ansprüche, **dadurch gekennzeichnet, dass** sich die Betätigungswelle (12) im Bereich der Bremseinheit (18) über wenigstens ein Lagerelement (60, 82) gegen das Gehäuse (24) abstützt.

14. Betätigungsvorrichtung (80, 90) nach Anspruch 13, **dadurch gekennzeichnet, dass** der wellenseitige Lagerabschnitt des Lagerelements (82) unmittelbar auf der Betätigungswelle (12) angeordnet ist.

15. Betätigungsvorrichtung (10) nach Anspruch 13, **dadurch gekennzeichnet, dass** der wellenseitige Lagerabschnitt des Lagerelements (60) auf dem Bremsnabenflansch (42) angeordnet ist.

16. Betätigungsvorrichtung (10, 80, 90) nach einem der Ansprüche 13 bis 15, **dadurch gekennzeichnet, dass** die Bremseinheit (18) einen gegen das Gehäuse (24) drehgesicherten, eine Bremswicklung (44) umfassenden Bremskörper (46) und einen eine Bremsscheibe (48) aufweisenden, mit der Betätigungswelle (12) drehfest verbundenen Bremsscheibenträger (56) aufweist, wobei bei Bestromung der Bremswicklung (44) die Bremsscheibe (48) gegen den Bremskörper (46) gezogen oder von dem Bremskörper (46) abgestoßen wird.

17. Betätigungsvorrichtung (10, 80, 90) nach Anspruch 16, **dadurch gekennzeichnet, dass** der Bremskörper (46) ein Magnetbremskörper ist.

18. Betätigungsvorrichtung (10, 80, 90) nach Anspruch 16 oder 17, **dadurch gekennzeichnet, dass** die Bremsscheibe (48) gegenüber dem Bremsscheibenträger (56) axial bewegbar ist, wobei zwischen der Bremsscheibe (48) und dem Bremsscheibenträger (56) ein Federelement (58) angeordnet ist, das die Bremsscheibe (48) in die dem Bremskörper (46) zugewandter oder abgewandter Richtung beaufschlagt ist.

19. Betätigungsvorrichtung (10, 80, 90) nach einem der Ansprüche 13 bis 18, **dadurch gekennzeichnet, dass** der Bremsscheibenträger (56) unmittelbar oder mittels einer Bremsscheibennabe (57) auf der Betätigungswelle (12) angeordnet ist.

20. Betätigungsvorrichtung (10, 80) nach einem der Ansprüche 13 bis 18, **dadurch gekennzeichnet, dass** der Bremsscheibenträger (56) oder die Bremsscheibennabe (57) einstückig mit dem Bremsnabenflansch (42) ausgebildet ist.

21. Betätigungsvorrichtung (80, 90) nach einem der Ansprüche 13 bis 20, **dadurch gekennzeichnet, dass** der Bremskörper (46) bremsnabenflanschseitig befestigt ist, wobei zwischen dem Bremskörper und dem Bremsnabenflansch ein Lager (84), insbesondere ein Gleitlager, angeordnet ist.

22. Betätigungsvorrichtung (10) nach einem der Ansprüche 13 bis 21, **dadurch gekennzeichnet, dass** der Bremskörper (46) gehäuseseitig befestigt ist.

23. Betätigungsvorrichtung (10, 80, 90) nach einem der vorhergehenden Ansprüche, **dadurch gekennzeichnet, dass** das Gehäuse (20) ein topfförmiges Grundgehäuse (22) und einen Gehäusedeckel (24) mit einem Durchbruch für die Betätigungswelle (12) aufweist.

24. Betätigungsvorrichtung (10, 80, 90) nach Anspruch 23, **dadurch gekennzeichnet, dass** die Antriebseinheit (16) im Bereich des Grundgehäuses (22) und die Bremseinheit (18) im Bereich des Gehäusedeckels (24) angeordnet ist.
